# EUROPEAN PATENT APPLICATION

(11) **EP 3 848 717 A1**
(43) Date of publication of application: **14.07.2021**
(21) Application number: 20150992.4
(22) Date of filing: 09.01.2020
(51) Int. Cl.: G01S 5/02, G01S 5/00

(54) **METHOD FOR LOCALIZING MOBILE AGENT-DEVICES OF A MULTI-AGENT-DEVICE-SYSTEM, MULTI-AGENT-DEVICE-SYSTEM, RECEIVING MOBILE AGENT-DEVICE AND TAG UNIT**

(71) Applicant: Siemens Aktiengesellschaft, 80333 München (DE)
(72) Inventor: Deroo, Frederik, 81549 München (DE); Dietrich, Vincent, 80639 München (DE); Eidenberger, Robert, 81539 München (DE)

(57) **Abstract**

In order to localize mobile Agent-Devices of a Multi-Agent-Device-System (MADS) in an improved manner, it is proposed to localize mobile Agent-Devices (AD₁,... ADₙ), e.g. a tag in the form of a unit mounted on a mobile apparatus, e.g. an "Automated Guided Vehicle (AGV)" of the Multi-Agent-Device-System, e.g. a heterogeneous sensor network, wherein the system or network participants such as the mobile Agent-Devices and Anchor-Node-Devices (ACND₁,... ACNDₘ) can have various quality properties, i.e. stationary vs. mobile, high precision vs. lower precision, expensive vs. cheap and some of the Anchor-Node-Devices as existing RTLS-solutions have positions precisely known, based on a "Real Time Localization Systems (RTLS)" such that (a) the mobile Agent-Devices can both send and receive data and process incoming measurements or data in order to perform relative position measurements, e.g. distances or angles or others sizes, between each other and to collect identities <ID's> of neighbors' mobile Agent-Devices being close enough to the Anchor-Node-Devices to get additional and more precise position measurements and (b) all position measurements are transformed into constraints with a varying uncertainty depending on the quality of the mobile Agent-Device and the distance to the precisely known positions of the Anchor-Node-Devices and being part of a optimization problem, which being solved leads localized positions of the mobile Agent-Devices.

## Description

The invention refers to a method for localizing mobile Agent-Devices of a Multi-Agent-Device-System according to the preamble of claim 1, a Multi-Agent-Device-System according to the preamble of claim 6, a receiving mobile Agent-Device according to the preamble of claim 11 and a tag unit according to the preamble of claim 16.

A mobile Agent-Device in the context of the present patent application is a definable hardware unit, e.g. a tag in the form of a unit mounted on a mobile apparatus, e.g. an "Automated Guided Vehicle (AGV)", with defined objectives related to the control and management of at least parts of a technical system. According to the state of the art such a mobile Agent-Device has only transmitting capabilities. The mobile Agent-Device can be applied in connection with technical system applications where the localization plays a crucial role, so for instance in the technical environment of "Automated Guided Vehicles (AGV's)", which need to know their location and that of others in order to be able to plan their paths and to avoid collisions.

There are various approaches to solve the localization of mobile Agent-Devices in a Multi-Agent-Device-System. They can generally be grouped into two families.

A first localization approach is based on "Simultaneous Localization And Mapping (SLAM)" or "Self-Localization And Mapping (SLAM)" based on sensor-readings, e.g. laser, radar or camera, to build a map based on features in the environment and to self-localize based on that map. Extensions include collaborative SLAM where multiple Agent-Devices share information in the map-building and localization step.

A second localization approach is based on infrastructure. The most prominent method is GPS where localization is based on signals from a group of satellites. This method is generally Intern to outdoor applications with a clear view of the sky, i.e. urban canyons or other obstructions limit the application of satellite-based positioning systems such as GPS, GLONASS, BEIDOU and GALILEO.

A relatively recent alternative is based on "Ultra-Wide-Band (UWB)" and is often referred to as "Real Time Localization Systems (RTLS)". These systems require the setup of several stationary anchor stations that can receive simple signals from small mobile sending units (so-called mobile tags) in the field. Based on time-of-flight or angle-of-arrival information, the position of the tags can be computed. However, the anchor stations need to be localized very precisely and their range is limited. On the other hand, accuracies in the range of a few centimeter can be achieved.

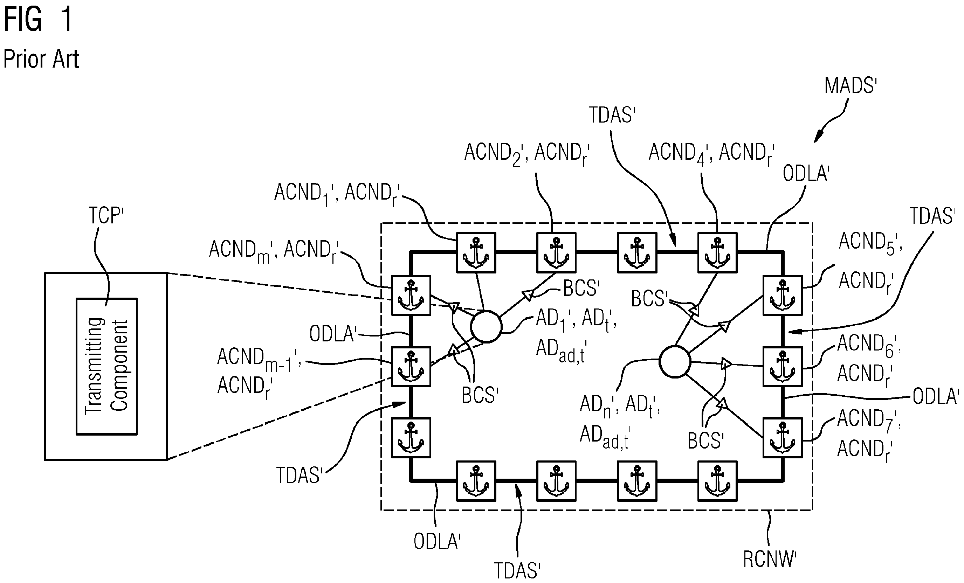

FIGURE 1 depicts - as prior art - a typical, RTLS-based scenario for localizing mobile Agent-Devices of a Multi-Agent-Device-System MADS'. The Multi-Agent-Device-System MADS' contains several (e.g. a number of) Anchor-Node-Devices ACND₁',... ACNDₘ' having each a known system position and spanning in their system arrangement a two-dimensional arrangement structure TDAS' with two one-dimensional line-arrangements ODLA' intersecting in pairs. According to the FIGURE 1 the two-dimensional arrangement structure TDAS' is formed preferably by a rectangular-shaped area. However, the rectangular shape is only an example as long as the two-dimensional arrangement structure TDAS' with two one-dimensional line-arrangements ODLA' intersecting in pairs is ensured. Inside of this rectangular-shaped area respectively the two-dimensional arrangement structure TDAS', the Anchor-Node-Devices ACND₁',... ACNDₘ' are arranged to form one part of the Multi-Agent-Device-System MADS', in principle a lot of mobile Agent-Device AD₁',... ADₙ' could be preserved. However, according to the depiction of the FIGURE 1 a first mobile Agent-Device AD₁' and a further mobile Agent-Device ADₙ' are located inside the rectangular-shaped area. In contrast to the Anchor-Node-Devices ACND₁',... ACNDₘ' the two mobile Agent-Devices AD₁', ADₙ' have within the MAD-System MADS' each an unknown volatile system position. Moreover, as already mentioned above the mobile Agent-Devices AD₁', ADₙ' are designed for instance as a tag in the form of a unit mounted on a mobile apparatus, e.g. an "Automated Guided Vehicle (AGV)". Regarding the structure of the mobile Agent-Devices AD₁', and each device comprises a transmitting component TCP'.

Both, the two mobile Agent-Devices AD₁', ADₙ' and the Anchor-Node-Devices ACND₁' ,... ACNDₘ', form a Radio-Communication-Network RCNW' within the MAD-System MADS' with a changing network topology. This means that due to the mobility feature or the roaming feature of the mobile Agent-Devices AD₁', ADₙ' the network topology is mutable.

In order to have the ability to localize each of the two mobile Agent-Devices AD₁', ADₙ in the Radio-Communication-Network RCNW' of the MAD-System MADS' each mobile Agent-Device AD₁', ADₙ' transmits via the transmitting component TCP' broadcast-signals BCS'. Thus, the mobile Agent-Device AD₁', ADₙ' therefore becomes a BCS-transmitting mobile Agent-Device ADₜ'. The transmitted broadcast-signals BCS' are received by those Anchor-Node-Devices ACND₁',... ACNDₘ', which are within the Radio-Communication-Network RCNW' adjacent, in a direct sending/receiving distance, to the mobile Agent-Device AD₁', ADₙ', which consequently become each an adjacent, BCS-transmitting mobile Agent-Device AD_{ad,t}'.

In the case of the first mobile Agent-Device AD₁', AD_{ad,t}' there are a first Anchor-Node-Device ACND₁', a second Anchor-Node-Device ACND₂', a (m-1)-th Anchor-Node-Device ACNDₘ₋₁' and a m-th Anchor-Node-Device ACNDₘ' of the Anchor-Node-Devices ACND₁',... ACNDₘ', which consequently receive the transmitted broadcast-signals BCS. Whereas in the case of the further mobile Agent-Device ADₙ' there are a fourth Anchor-Node-Device ACND₄', a fifth Anchor-Node-Device ACND₅', a sixth Anchor-Node-Device ACND₆' and a seventh Anchor-Node-Device ACND₇' of the Anchor-Node-Devices ACND₁',... ACNDₘ', which consequently receive the transmitted broadcast-signals BCS.

Due to the reception of the broadcast-signals BCS' the cited Anchor-Node-Devices ACND₁', ACND₂', ACND₄', ACND₅', ACND₆', ACND₇', ACNDₘ₋₁', ACNDₘ' become each a receiving Anchor-Node-Device ACNDᵣ' receiving the transmitted broadcast-signals BCS'.

The receiving Anchor-Node-Device ACNDᵣ' processes now - for instance in a processing part of the Anchor-Node-Device AC-NDᵣ', not depicted in the FIGURE 1 - based on at least one of broadcast-signal-runtime-measurements and angle measurements between the first or further, adjacent, BCS-transmitting mobile Agent-Device AD₁', ADₙ', AD_{ad,t}' and the receiving Anchor-Node-Device ACNDᵣ' geometric reference values. Such values can be for instance distances or angles.

In order to localize each of the first or further, adjacent, BCS-transmitting mobile Agent-Device AD₁', ADₙ', AD_{ad,t}' clearly it is necessary that at least three receiving Anchor-Node-Devices ACNDᵣ', from which at least one is arranged in each of the two one-dimensional line-arrangements ODLA', must process each geometric reference values.

This means with respect to the depiction in the FIGURE 1 that to localize the first, adjacent, BCS-transmitting mobile Agent-Device AD₁', AD_{ad,t}' clearly for instance the first Anchor-Node-Devices ACND₁', the second Anchor-Node-Devices ACND₂' and the m-th Anchor-Node-Devices ACNDₘ' as the three receiving Anchor-Node-Devices ACNDᵣ' are arranged such that at least one receiving Anchor-Node-Devices ACNDᵣ' is arranged in each of the two one-dimensional line-arrangements ODLA'. This is indeed the case as depicted in the FIGURE 1. But it is also the case for the further, adjacent, BCS-transmitting mobile Agent-Device ADₙ', AD_{ad,t}',

If this is not the case, so for instance when with respect to the first, adjacent, BCS-transmitting mobile Agent-Device AD₁', AD_{ad,t}' only two receiving Anchor-Node-Devices ACNDᵣ', e.g. the first Anchor-Node-Devices ACND₁' and the second Anchor-Node-Devices ACND₂', process each geometric reference values, the localized position of the first, adjacent, BCS-transmitting mobile Agent-Device AD₁', AD_{ad,t}' is not localized clearly, because there could be a further possible position of the first, adjacent, BCS-transmitting mobile Agent-Device AD₁', AD_{ad,t}' outside the rectangular-shaped area respectively the two-dimensional arrangement structure TDAS' of the MAD-system MADS', which is mirror position of the depicted one. Only through an additional third receiving Anchor-Node-Devices ACNDᵣ', e.g. the m-th Anchor-Node-Devices AC-NDₘ', this mirror position is no longer possible.

The geometric reference values processed or generated in this way form constraints of an optimization problem enabling localization. How to solve such an optimization problem is known from the mathematical point of view. The constraints however include preferably probabilistic information representing deviations of the aforementioned measurements. By solving the optimization problem a calculated solution provides the localized position of the first, adjacent, BCS-transmitting mobile Agent-Device AD₁, AD_{ad,t}'.

It is an objective of the invention to propose a Method for localizing mobile Agent-Devices of a Multi-Agent-Device-System, a mobile Agent-Device and a Multi-Agent-Device-System, by which the agent-localizing in the Multi-Agent-Device-System is improved.

This objective is solved based on a method defined in the preamble of claim 1 by the features in the characterizing part of claim 1.

The objective is further solved based on a Multi-Agent-Device-System defined in the preamble of claim 6 by the features in the characterizing part of claim 6.

The objective is solved furthermore based on a receiving mobile Agent-Device defined in the preamble of claim 11 by the features in the characterizing part of claim 11.

The objective is solved moreover based on a tag unit defined in the preamble of claim 16 by the features in the characterizing part of claim 16.

The main idea of the invention according to the claims 1, 6 and 11 is to localize mobile Agent-Devices, e.g. a tag in the form of a unit mounted on a mobile apparatus, e.g. an "Automated Guided Vehicle (AGV)" of a Multi-Agent-Device-System, e.g. a heterogeneous sensor network, wherein the system or network participants such as the mobile Agent-Devices and Anchor-Node-Devices can have various quality properties, i.e. stationary vs. mobile, high precision vs. lower precision, expensive vs. cheap and some of the Anchor-Node-Devices as existing RTLS-solutions have positions precisely known, based on a "Real Time Localization Systems (RTLS)" such that (**a**) the mobile Agent-Devices can both send and receive data and process incoming measurements or data in order to perform relative position measurements, e.g. distances or angles or others sizes, between each other and to collect identities <ID's> of neighbors' mobile Agent-Devices being close enough to the Anchor-Node-Devices to get additional and more precise position measurements and (**b**) all position measurements are transformed into constraints with a varying uncertainty depending on the quality of the mobile Agent-Device and the distance to the precisely known positions of the Anchor-Node-Devices and being part of a optimization problem, which being solved leads localized positions of the mobile Agent-Devices. This is preferably realized according to claim 16 by a tag unit for localization issues with a transmitting component including additionally a receiving component and a processing component, wherein the processing component, being connected with the receiving component and the transmitting component, forms with the receiving component and the transmitting component the unit for handling a localization issue. The tag unit is used in particular as the mobile Agent-Device of the Multi-Agent-Device-System.

The implementation of solving the optimization problem is carried out advantageously according to the claims 2, 3, 7, 8 and 12 centrally in a Central Computing Unit.

Because the localization provided by the Anchor-Node-Devices is very precise, the mobile Agent-Devices that are close enough to them can essentially take on the role of new, slightly less reliable anchor-nodes for the mobile Agent-Devices that are further away. This increases the overall accuracy of the Multi-Agent-Device-System in comparison to existing indoor approaches while keeping the requirements for installed infrastructure relatively small.
Furthermore, if there are many involved mobile Agent-Devices, the number of constraints increases which in turn again increases the overall accuracy.

One can imagine that the edges in the optimization graph of the known "Real Time Localization Systems (RTLS)", e.g. according to the FIGURE 1, connect only Anchor-Node-Devices with mobile Agent-Devices, and according to the invention the mobile Agent-Devices among themselves can also have connections thus adding additional constraints to the optimization problem.

An additional separate aspect of the invention is that it enables an adaptation of the achievable localization accuracy in specific regions of the Multi-Agent-Device-System by repositioning the mobile Agent-Devices. This requires that the mobile Agent-Devices are cooperative which is use-case dependent.

Thus, depending on the possible time-varying demand of localization accuracy, mobile anchor-nodes could move to specific positions to make the overall network more accurate in the desired region of the Multi-Agent-Device-System. To achieve this, the Multi-Agent-Device-System is extended by an entity, e.g. a further device, that allows user-inputs to specify the desired region of the Multi-Agent-Device-System and accuracy, as well as a controlling unit that performs the planning task of positioning the mobile Agent-Devices.

Yet another separate aspect of the invention is that the mobile Agent-Devices could be equipped with separate sensors (e.g. according to a 3D laser scanning method called "LIDAR" that measures distance to a target by illuminating the target with laser-light and measuring the reflected light with the separate sensors) that enhance their localization capabilities which could improve the overall localization accuracy for the mobile Agent-Devices in a collaborative way.

The advantages of the present invention are:
- The higher localization accuracy and the larger coverage while maintaining accuracy, which could be possibly adaptive.
- The larger number of mobile Agent-Devices involved in the computation of constraints for the optimization problem increases the localization accuracy. An adaptive approach can come into play when some mobile Agent-Devices are purposefully moved into specific areas to increase the accuracy (*cf*. *the above statements*).
- By making more mobile Agent-Devices more powerful by incorporating a sending component, a receiving component and a processing component (*cf. claim 11*), the high accuracy of the anchor stations can be propagated further beyond the previously covered area of the Multi-Agent-Device-System. This can again be turned into an adaptive approach by spreading the mobile Agent-Devices in a desired pattern to maximize coverage which is determined by a planning entity or device or module (*cf. the above statements*).

The invention is applicable in various areas where localization of mobile Agent-Devices plays a role. One possible example is an "Automated Guided Vehicle (AGV)" in factory automation applications.

An alternative application area are autonomous trains/trams/vehicles where both the vehicle itself needs to be localized but also other objects such as other vehicles and pedestrians could also be equipped with mobile Agent-Devices, tags or sensors (e.g. they are integrated into the vehicle or a smartphone) to create a dense network of mobile Agent-Devices allowing for a robust localization of all the mobile Agent-Devices in the network.

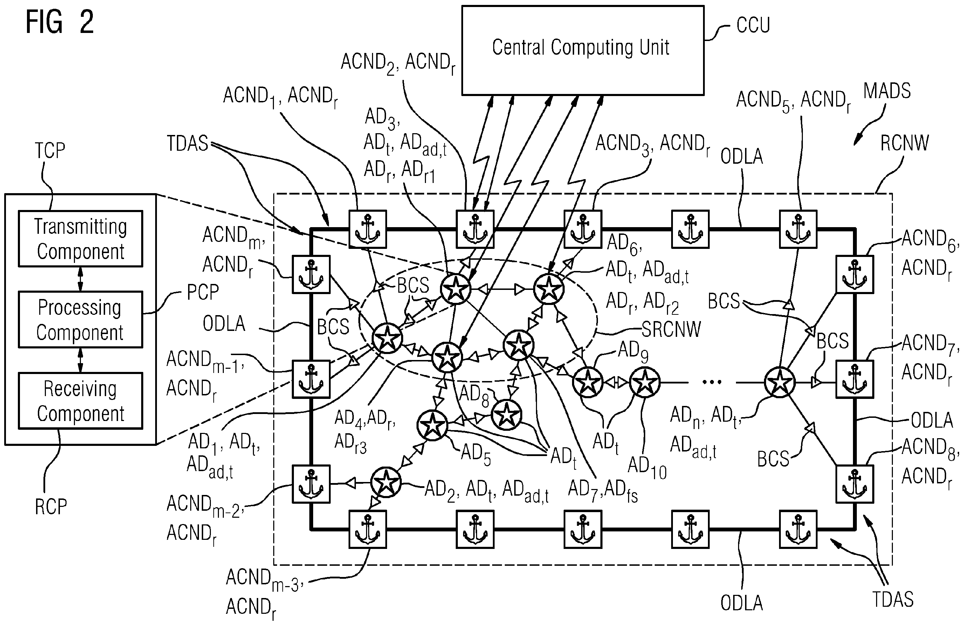

Moreover, advantageous further developments of the invention arise out of the following description of a preferred embodiment of the invention according to FIGURE 2, which shows based on the FIGURE 1 an extended Multi-Agent-Device-System for localizing mobile Agent-Devices.

FIGURE 2 depicts in comparison to the typical, RTLS-based scenario according to the FIGURE 1 an extended Multi-Agent-Device-System for localizing mobile Agent-Devices MADS. The Multi-Agent-Device-System MADS contains several (e.g. a number of) Anchor-Node-Devices ACND₁,... ACNDₘ having each a known system position and spanning in their system arrangement a two-dimensional arrangement structure TDAS with two one-dimensional line-arrangements ODLA intersecting in pairs. According to the FIGURE 2 the two-dimensional arrangement structure TDAS is formed preferably by a rectangular-shaped area. However, the rectangular shape is only an example as long as the two-dimensional arrangement structure TDAS with two one-dimensional line-arrangements ODLA intersecting in pairs is ensured. Inside of this rectangular-shaped area respectively the two-dimensional arrangement structure TDAS, the Anchor-Node-Devices ACND₁,... ACNDₘ are arranged to form one part of the Multi-Agent-Device-System MADS, in principle a lot of mobile Agent-Device AD₁,... ADₙ could be preserved.

Now in deviation from the FIGURE 1 there are 11 mobile Agent-Device inside of the rectangular-shaped area. So a first mobile Agent-Device AD₁, a second mobile Agent-Device AD₂, a third mobile Agent-Device AD₃, a fourth mobile Agent-Device AD₄, a fifth mobile Agent-Device AD₅, a sixth mobile Agent-Device AD₆, a seventh mobile Agent-Device AD₇, an eighth mobile Agent-Device AD₈, a ninth mobile Agent-Device AD₉, a tenth mobile Agent-Device AD₁₀ and a further mobile Agent-Device ADₙ. In contrast to the Anchor-Node-Devices ACND₁,... ACNDₘ the 11 mobile Agent-Devices AD₁,...AD₁₀, ADₙ have within the MAD-System MADS each an unknown volatile system position. Again, as already mentioned with respect to the FIGURE 1, the 11 mobile Agent-Devices AD₁,...AD₁₀, ADₙ are designed for instance as a tag in the form of a unit mounted on a mobile apparatus, e.g. an "Automated Guided Vehicle (AGV)". Regarding the structure of the 11 mobile Agent-Devices AD₁,...AD₁₀, ADₙ each device comprises a transmitting component TCP, a processing component PCP and receiving component RCP, wherein the transmitting component TCP and the receiving component RCP are connected with the processing component PCP, which forms a functional unit with the transmitting component TCP and the receiving component RCP.

More generally each mobile Agent-Device AD₁,... ADₙ is realized particularly by a tag unit for localization issues with a transmitting component including additionally a receiving component and a processing component, wherein the processing component, being connected with the receiving component and the transmitting component, forms with the receiving component and the transmitting component the unit for handling a localization issue.

Both, the 11 mobile Agent-Devices AD₁,...AD₁₀, ADₙ and the Anchor-Node-Devices ACND₁,... ACNDₘ, form a Radio-Communication-Network RCNW within the MAD-System MADS with a changing network topology. This means that due to the mobility feature or the roaming feature of the mobile Agent-Devices AD₁,...AD₁₀, ADₙ the network topology is mutable.

In order to have the ability to localize each of the 11 mobile Agent-Devices AD₁,...AD₁₀, ADₙ in the Radio-Communication-Network RCNW of the MAD-System MADS it - in contrast to the scenario depicted in the FIGURE 1 - has to be differentiated between
(i) the first mobile Agent-Device AD₁, the second mobile Agent-Device AD₂, the third mobile Agent-Device AD₃, the sixth mobile Agent-Device AD₆ and the further mobile Agent-Device ADₙ, which are within the Radio-Communication-Network RCNW adjacent, in a direct sending/receiving distance, to at least one Anchor-Node-Device of the Anchor-Node-Devices ACND₁,... ACNDₘ, and
(**ii**) those, namely the fourth mobile Agent-Device AD₄, the fifth mobile Agent-Device AD₅, the seventh mobile Agent-Device AD₇, the eighth mobile Agent-Device AD₈, the ninth mobile Agent-Device AD₉ and the tenth mobile Agent-Device AD₁₀, which are not, although each cited mobile Agent-Device AD₁,...AD₁₀, ADₙ transmits via the transmitting component TCP broadcast-signals BCS. The broadcast-signal BCS is preferably a time signal.

Thus, the mobile Agent-Devices AD₁,...AD₁₀, ADₙ therefore become each a BCS-transmitting mobile Agent-Device ADₜ. The transmitted broadcast-signals BCS can be received now by those Anchor-Node-Devices ACND₁,... ACNDₘ, which are within the Radio-Communication-Network RCNW adjacent, in a direct sending/receiving distance, to the aforementioned mobile Agent-Devices AD₁, AD₂, AD₃, AD₆ ADₙ, which consequently become each an adjacent, BCS-transmitting mobile Agent-Device AD_{ad,t}.

### "Referring to (i)":

In the case of the first mobile Agent-Device AD₁, AD_{ad,t} there are a first Anchor-Node-Device ACND₁, a (m)-th Anchor-Node-Device ACNDₘ and a (m-1)th Anchor-Node-Device ACNDₘ₋₁ of the Anchor-Node-Devices ACND₁,... ACNDₘ, which consequently receive the transmitted broadcast-signals BCS.

In the case of the second mobile Agent-Device AD₂, AD_{ad,t} there are a (m-2)-th Anchor-Node-Device ACNDₘ₋₂ and a (m-3)th Anchor-Node-Device ACNDₘ₋₃ of the Anchor-Node-Devices ACND₁,... ACNDₘ, which consequently receive the transmitted broadcast-signals BCS.

In the case of the third mobile Agent-Device AD₃, AD_{ad,t} there is a second Anchor-Node-Device ACND₂ of the Anchor-Node-Devices ACND₁,... ACNDₘ, which consequently receives the transmitted broadcast-signals BCS.

In the case of the sixth mobile Agent-Device AD₆, AD_{ad,t} there is a third Anchor-Node-Device ACND₃ of the Anchor-Node-Devices ACND₁,... ACNDₘ, which consequently receives the transmitted broadcast-signals BCS.

Whereas in the case of the further mobile Agent-Device ADₙ there are a fifth Anchor-Node-Device ACND₅, a sixth Anchor-Node-Device ACND₆, a seventh Anchor-Node-Device ACND₇ and a eighth Anchor-Node-Device ACND₈ of the Anchor-Node-Devices ACND₁,... ACNDₘ, which consequently receive the transmitted broadcast-signals BCS.

Due to the reception of the broadcast-signals BCS the cited Anchor-Node-Devices ACND₁, ACND₂, ACND₃, ACND₅, ACND₆, ACND₇, ACND₈, ACNDₘ₋₃, ACNDₘ₋₂, ACNDₘ₋₁, ACNDₘ become each a receiving Anchor-Node-Device ACNDᵣ receiving the transmitted broadcast-signals BCS.

The receiving Anchor-Node-Device ACNDᵣ processes now - for instance in a processing part of the Anchor-Node-Device AC-NDᵣ, not depicted in the FIGURE 2 - based on at least one of broadcast-signal-runtime-measurements and angle measurements between the first, second, third, sixth or further, adjacent, BCS-transmitting mobile Agent-Device AD₁, AD₂, AD₃, AD₆ ADₙ, AD_{ad,t} and the receiving Anchor-Node-Device ACNDᵣ geometric reference values. Such values can be for instance distances or angles.

In order to localize each of the first, second, third, sixth or further, adjacent, BCS-transmitting mobile Agent-Device AD₁, AD₂, AD₃, AD₆ ADₙ, AD_{ad,t} clearly it is necessary that at least three receiving Anchor-Node-Devices ACNDᵣ, from which at least one is arranged in each of the two one-dimensional line-arrangements ODLA, must process each geometric reference values.

This means with respect to the depiction in the FIGURE 2 that to localize for instance the first, adjacent, BCS-transmitting mobile Agent-Device AD₁, AD_{ad,t} clearly for instance the first Anchor-Node-Devices ACND₁, the m-th Anchor-Node-Devices ACNDₘ and the (m-1)-th Anchor-Node-Devices ACNDₘ₋₁ as the three receiving Anchor-Node-Devices ACNDᵣ are arranged such that at least one receiving Anchor-Node-Devices ACNDᵣ is arranged in each of the two one-dimensional line-arrangements ODLA. This is indeed the case as depicted in the FIGURE 1. But it is also the case for the further, adjacent, BCS-transmitting mobile Agent-Device ADₙ, AD_{ad,t}, whereas for the second, third and sixth, adjacent, BCS-transmitting mobile Agent-Device AD₂; AD₃, AD₆, AD_{ad,t} this condition is not fulfilled. How these two adjacent, BCS-transmitting mobile Agent-Devices AD₃, AD₆, AD_{ad,t} can be localized clearly will explained further below in the context of the chapter "Referring to (**ii**)".

However, if this is not the case, so for instance when with respect to the first, adjacent, BCS-transmitting mobile Agent-Device AD₁, AD_{ad,t} only two receiving Anchor-Node-Devices ACNDᵣ, e.g. the m-th Anchor-Node-Devices ACNDₘ and the (m-1)-th Anchor-Node-Devices ACNDₘ₋₁, process each geometric reference values, the localized position of the first, adjacent, BCS-transmitting mobile Agent-Device AD₁, AD_{ad,t} is not localized clearly, because there could be a further possible position of the first, adjacent, BCS-transmitting mobile Agent-Device AD₁, AD_{ad,t} outside the rectangular-shaped area respectively the two-dimensional arrangement structure TDAS of the MAD-system MADS, which is mirror position of the depicted one. Only through an additional third receiving Anchor-Node-Devices ACNDᵣ, e.g. the first Anchor-Node-Devices ACND₁, this mirror position is no longer possible.

The geometric reference values processed or generated in this way form constraints of an optimization problem enabling localization. How to solve such an optimization problem is known from the mathematical point of view. The constraints however include preferably probabilistic information representing deviations of the aforementioned measurements. By solving the optimization problem a calculated solution provides the localized position of the first, adjacent, BCS-transmitting mobile Agent-Device AD₁, AD_{ad,t}.

### "Referring to (ii)":

In order to enable the localization also of those mobile Agent-Device AD₄, AD₅, AD₇, AD₈, ADg, AD₁₀, ADₜ as mentioned above under (**ii**) and those two adjacent, BCS-transmitting mobile Agent-Devices AD₃, AD₆, AD_{ad,t} not fulfilling the condition discussed in the chapter "Referring to (**ii**)" as well as more generally of any, freely selectable BCS-transmitting mobile Agent-Device AD_{fs} of the BCS-transmitting mobile Agent-Devices AD₄, AD₅, AD₇, AD₅, AD₉, AD₁₀, ADₜ, AD₃, AD₆, AD_{ad,t} transmitting the broadcast-signals BCS, which are within the Radio-Communication-Network RCNW either directly receivable or indirectly receivable by the Anchor-Node-Devices ACND₁,... ACNDₘ or the receiving Anchor-Node-Device ACNDᵣ, the following based on the receiving and processing capability realized by the receiving component RCP and the processing component PCP implemented besides the transmitting component TCP in each mobile Agent-Device AD₁,... ADₙ is necessary.

To explain and show exemplary according to the depiction in the FIGURE 2 what is necessary, the seventh BCS-transmitting mobile Agent-Device AD₇, ADₜ is now the freely selectable BCS-transmitting mobile Agent-Device AD_{fs}. However, once again the freely selectable BCS-transmitting mobile Agent-Device AD_{fs} could be any other BCS-transmitting mobile Agent-Devices ADₜ, AD_{ad,t}.

First, each BCS-transmitting mobile Agent-Device ADₜ, AD_{ad,t}, which is within the Radio-Communication-Network RCNW of the MAD-system MADS in a direct sending/receiving distance to the freely selectable BCS-transmitting mobile Agent-Device AD_{fs},AD₇ receives the broadcast-signals BCS transmitted from the freely selectable BCS-transmitting mobile Agent-Device AD_{fs},AD₇ and thus becomes each a BCS-receiving mobile Agent-Device ADᵣ. The BCS-receiving mobile Agent-Device ADᵣ as each BCS-transmitting mobile Agent-Devices ADₜ, as already mentioned, has the transmitting component TCP, the receiving component RCP and the processing component PCP and therefore besides a BCS-transmitting capability a BCS-receiving capability as well as a processing capability.

Second, it is necessary to have at least three of the BCS-receiving mobile Agent-Device ADᵣ, a first BCS-receiving mobile Agent-Device ADᵣ₁, a second BCS-receiving mobile Agent-Device ADᵣ₂ and a third BCS-receiving mobile Agent-Device ADᵣ₃, which
(**1**) are each within the Radio-Communication-Network RCNW in a direct sending/receiving distance to the freely selectable BCS-transmitting mobile Agent-Device AD_{fs},AD₇ and
(**2**) receive each the broadcast-signals BCS of the freely selectable BCS-transmitting mobile Agent-Device AD_{fs},AD₇.

Regarding (**1**) and the seventh mobile Agent-Device AD₇ it is the case. So are, the first BCS-receiving mobile Agent-Device ADᵣ₁ as the third mobile Agent-Device AD₃, the second BCS-receiving mobile Agent-Device ADᵣ₂ as the sixth mobile Agent-Device AD₆ and the third BCS-receiving mobile Agent-Device ADᵣ₃ as the fourth mobile Agent-Device AD₄.

Regarding (**2**) and after the reception the broadcast-signals BCS
- the third BCS-receiving mobile Agent-Device AD₃ processes due to the implemented processing component PCP and based on at least one of relative position-based broadcast-signal-runtime-measurements and angle measurements between the freely selectable BCS-transmitting mobile Agent-Device AD₇ and the third BCS-receiving mobile Agent-Device AD₃ first geometric reference values,
- the sixth BCS-receiving mobile Agent-Device AD₆ processes due to the implemented processing component PCP and based on at least one of relative position-based broadcast-signal-runtime-measurements and angle measurements between the freely selectable BCS-transmitting mobile Agent-Device AD₇ and the sixth BCS-receiving mobile Agent-Device AD₆ second geometric reference values,
- the fourth BCS-receiving mobile Agent-Device AD₄ processes due to the implemented processing component PCP and based on at least one of relative position-based broadcast-signal-runtime-measurements and angle measurements between the freely selectable BCS-transmitting mobile Agent-Device AD₇ and the fourth BCS-receiving mobile Agent-Device AD₄ third geometric reference values.

Third, at least the three BCS-receiving mobile Agent-Devices ADᵣ₁, AD₃; ADᵣ₂, AD₆; ADᵣ₃, AD₄ and the freely selectable BCS-transmitting mobile Agent-Device AD_{fs}, AD₇ form a Sub-Radio-Communication-Network SRCNW, which is arranged within the Radio-Communication-Network RCNW in a direct sending/receiving distance to at least two receiving Anchor-Node-Device ACNDᵣ, from which at least one is arranged in each of the two one-dimensional line-arrangements ODLA. To achieve such an arrangement or a constellation the Sub-Radio-Communication-Network SRCNW depicted in the FIGURE 2 includes also the first adjacent, BCS-transmitting mobile Agent-Device AD₁, AD_{ad,t}. By this first adjacent, BCS-transmitting mobile Agent-Device AD₁, AD_{ad,t} the Sub-Radio-Communication-Network SRCNW is in the direct sending/receiving distance to for instance the (m-1)-th receiving Anchor-Node-Device ACNDₘ₋₁, ACNDᵣ on one side and the second receiving Anchor-Node-Device ACND₂, ACNDᵣ on the other.

In this arrangement or constellation following the example
- the (m-1)-th receiving Anchor-Node-Device ACNDₘ₋₁, ACNDᵣ processes due to the broadcast-signals BCS received from the first adjacent, BCS-transmitting mobile Agent-Device AD₁, AD_{ad,t} of the Sub-Radio-Communication-Network SRCNW and based on at least one of relative position-based broadcast-signal-runtime-measurements and angle measurements between the first adjacent, BCS-transmitting mobile Agent-Device AD₁, AD_{ad,t} and the (m-1)-th receiving Anchor-Node-Device ACNDₘ₋₁, ACNDᵣ fourth geometric reference values and
- the second receiving Anchor-Node-Device ACND₂, ACNDᵣ processes due to the broadcast-signals BCS received from the third adjacent, BCS-transmitting mobile Agent-Device AD₃, AD_{ad,t} of the Sub-Radio-Communication-Network SRCNW and based on at least one of relative position-based broadcast-signal-runtime-measurements and angle measurements between the third adjacent, BCS-transmitting mobile Agent-Device AD₃, AD_{ad,t} and the second receiving Anchor-Node-Device ACND₂, ACNDᵣ fifth geometric reference values.

Fourth, the processed first to fifth geometric reference values form further constraints of the optimization problem enabling extended localization such that by solving the optimization problem a further calculated solution provides a localized position of the freely selectable BCS-transmitting mobile Agent-Device AD_{fs}, AD₇. The constraints however include again preferably probabilistic information representing deviations of the aforementioned measurements.

The solving of the optimization problem with the constraints and the calculating of the solutions enabling the localization are carried out centrally in a Central Computing Unit CCU, wherein the processed geometric reference values are transferred from the receiving Anchor-Node-Device ACNDₘ₋₁, AC-NDᵣ, ACND₂, ACNDᵣ to the Central Computing unit CCU. The Central Computing Unit CCU This transfer

The solving of the optimization problem with the further constraints and the calculating of the further solution enabling the extended localization are carried out also centrally in the Central Computing Unit CCU, wherein the processed geometric reference values are transferred from the BCS-receiving mobile Agent-Device ADᵣ₁, AD₃; ADᵣ₂, AD₆; ADᵣ₃, AD₄ to the Central Computing unit CCU.

## Claims

1. Method for localizing mobile Agent-Devices of a Multi-Agent-Device-System (MADS, MADS') with a number of Anchor-Node-Devices (ACND₁,... ACNDₘ, ACND₁',... ACNDₘ') having each a known system position and spanning in their system arrangement a two-dimensional arrangement structure (TDAS, TDAS') with two one-dimensional line-arrangements (ODLA, ODLA') intersecting in pairs and a further number of mobile Agent-Device (AD₁,... ADₙ, AD₁',... ADₙ') having each an unknown volatile system position, which form a Radio-Communication-Network (RCNW, RCNW') within the MAD-System (MADS, MADS') with a changing network topology, wherein for the localization
**a**) each mobile Agent-Device (AD₁,... ADₙ, AD₁',... ADₙ') transmits broadcast-signals (BCS, BCS') and becomes a BCS-transmitting mobile Agent-Device (ADₜ, ADₜ'),
**b**) a receiving Anchor-Node-Device (ACNDᵣ, ACNDᵣ') of the Anchor-Node-Devices (ACND₁,... ACNDₘ, ACND₁',... ACNDₘ'), being within the Radio-Communication-Network (RCNW, RCNW') in a direct sending/receiving distance to at least one adjacent, BCS-transmitting mobile Agent-Device (AD_{ad,t}, AD_{ad,t}') of the BCS-transmitting mobile Agent-Devices (ADₜ, ADₜ') receiving the broadcast-signals (BCS, BCS') of the adjacent, BCS-transmitting mobile Agent-Device (AD_{ad,t}, AD_{ad,t}'), processes based on at least one of broadcast-signal-runtime-measurements and angle measurements between the adjacent, BCS-transmitting mobile Agent-Device (AD_{ad,t}, AD_{ad,t}') and the receiving Anchor-Node-Device (ACNDᵣ, ACNDᵣ') geometric reference values, in particular such as distances or angles,
**c**) of the adjacent, BCS-transmitting mobile Agent-Device (AD_{ad,t}, AD_{ad,t}') at least three receiving Anchor-Node-Devices (ACNDᵣ, ACNDᵣ'), from which at least one is arranged in each of the two one-dimensional line-arrangements (ODLA, ODLA'), process each geometric reference values,
**d**) the processed geometric reference values form constraints, particularly including probabilistic information representing deviations of the measurements, of an optimization problem enabling localization such that by solving the optimization problem a calculated solution provides a localized position of the adjacent, BCS-transmitting mobile Agent-Device (AD_{ad,t}, AD_{ad,t}'),
**characterized in that**
for localizing any, freely selectable BCS-transmitting mobile Agent-Device (AD_{fs}) of the BCS-transmitting mobile Agent-Devices (ADₜ, AD_{ad,t}) transmitting the broadcast-signals (BCS) being within the Radio-Communication-Network (RCNW) either directly receivable or indirectly receivable by the Anchor-Node-Devices (ACND₁,... ACNDₘ) respectively the receiving Anchor-Node-Device (ACNDᵣ)
**e**) each BCS-transmitting mobile Agent-Device (ADₜ, AD_{ad,t}) being within the Radio-Communication-Network (RCNW) in a direct sending/receiving distance to the freely selectable BCS-transmitting mobile Agent-Device (AD_{fs}) receives the broadcast-signals (BCS) transmitted from the freely selectable BCS-transmitting mobile Agent-Device (AD_{fs}) and thus becomes each a BCS-receiving mobile Agent-Device (ADᵣ) having in addition to a BCS-transmitting capability a BCS-receiving capability,
**f**) at least three of the BCS-receiving mobile Agent-Device (ADᵣ) - a first BCS-receiving mobile Agent-Device (ADᵣ₁), a second BCS-receiving mobile Agent-Device (ADᵣ₂) and a third BCS-receiving mobile Agent-Device (ADᵣ₃) - being each within the Radio-Communication-Network (RCNW) in a direct sending/receiving distance to the freely selectable BCS-transmitting mobile Agent-Device (AD_{fs}) and receiving each the broadcast-signals (BCS) of the freely selectable BCS-transmitting mobile Agent-Device (AD_{fs}) process each based on at least one of relative position-based broadcast-signal-runtime-measurements and angle measurements between the freely selectable BCS-transmitting mobile Agent-Device (AD_{fs}) and each of the three receiving mobile Agent-Devices (ADᵣ₁, ADᵣ₂, ADᵣ₃) geometric reference values,
**g**) at least the three BCS-receiving mobile Agent-Devices (ADᵣ₁, ADᵣ₂, ADᵣ₃) and the freely selectable BCS-transmitting mobile Agent-Device (AD_{fs}) form a Sub-Radio-Communication-Network (SRCNW) being within the Radio-Communication-Network (RCNW) in a direct sending/receiving distance to at least two receiving Anchor-Node-Device (ACNDᵣ), from which at least one is arranged in each of the two one-dimensional line-arrangements (ODLA) and which process each due to the broadcast-signals (BCS) received each from an adjacent, BCS-transmitting mobile Agent-Device (AD_{ad,t}) of the Sub-Radio-Communication-Network (SRCNW) and based on at least one of relative position-based broadcast-signal-runtime-measurements and angle measurements between the adjacent, BCS-transmitting mobile Agent-Device (AD_{ad,t}) and the receiving Anchor-Node-Device (ACNDᵣ) geometric reference values,
**h**) the processed geometric reference values form further constraints, particularly including probabilistic information representing deviations of the measurements, of the optimization problem enabling extended localization such that by solving the optimization problem a further calculated solution provides a localized position of the freely selectable BCS-transmitting mobile Agent-Device (AD_{fs}).

2. Method according to claim 1, **characterized in that** the solving of the optimization problem with the constraints and the calculating of the solutions enabling the localization are carried out centrally in a Central Computing Unit (CCU), wherein the processed geometric reference values are transferred from the receiving Anchor-Node-Device (ACNDᵣ) to the Central Computing unit (CCU).

3. Method according to claim 1 or 2, **characterized in that**
the solving of the optimization problem with the further constraints and the calculating of the further solution enabling the extended localization are carried out centrally in a Central Computing Unit (CCU), wherein the processed geometric reference values are transferred from the BCS-receiving mobile Agent-Device (ADᵣ) to the Central Computing unit (CCU).

4. Method according to one of the claims 1 to 3, **characterized in that**
the mobile Agent-Device (AD₁,... ADₙ, ADₜ, AD_{ad,t}, AD_{fs}, ADᵣ, ADᵣ₁, ADᵣ₂, ADᵣ₃) is a Tag-Device mounted on a mobile "Automated Guided Vehicle <AGV>".

5. Method according to one of the claims 1 to 4, **characterized in that**
the broadcast-signal (BCS) is a time signal.

6. Multi-Agent-Device-System (MADS, MADS') for localizing mobile Agent-Devices with a number of Anchor-Node-Devices (ACND₁,... ACNDₘ, ACND₁',... ACNDₘ') having each a known system position and spanning in their system arrangement a two-dimensional arrangement structure (TDAS, TDAS') with two one-dimensional line-arrangements (ODLA, ODLA') intersecting in pairs and a further number of mobile Agent-Device (AD₁,... ADₙ, AD₁',... ADₙ') having each an unknown volatile system position, which form a Radio-Communication-Network (RCNW, RCNW') within the MAD-System (MADS, MADS') with a changing network topology, wherein
**a**) each mobile Agent-Device (AD₁,... ADₙ, AD₁',... ADₙ') transmits broadcast-signals (BCS, BCS') and becomes a BCS-transmitting mobile Agent-Device (ADₜ, ADₜ'),
**b**) a receiving Anchor-Node-Device (ACNDᵣ, ACNDᵣ') of the Anchor-Node-Devices (ACND₁,... ACNDₘ, ACND₁' ,... ACNDₘ'), being within the Radio-Communication-Network (RCNW, RCNW') in a direct sending/receiving distance to at least one adjacent, BCS-transmitting mobile Agent-Device (AD_{ad,t}, AD_{ad,t}') of the BCS-transmitting mobile Agent-Devices (ADₜ, ADₜ') receiving the broadcast-signals (BCS, BCS') of the adjacent, BCS-transmitting mobile Agent-Device (AD_{ad,t}, AD_{ad,t}'), processes based on at least one of based broadcast-signal-runtime-measurements and angle measurements between the adjacent, BCS-transmitting mobile Agent-Device (AD_{ad,t}, AD_{ad,t}') and the receiving Anchor-Node-Device (ACNDᵣ, ACNDᵣ') geometric reference values, in particular such as distances or angles,
**c**) in order to localize the adjacent, BCS-transmitting mobile Agent-Device (AD_{ad,t}, AD_{ad,t}') at least three receiving Anchor-Node-Devices (ACNDᵣ, ACNDᵣ'), from which at least one is arranged in each of the two one-dimensional line-arrangements (ODLA, ODLA'), process each geometric reference values,
**d**) the processed geometric reference values form constraints, particularly including probabilistic information representing deviations of the measurements, of an optimization problem enabling localization such that by solving the optimization problem a calculated solution provides a localized position of the adjacent, BCS-transmitting mobile Agent-Device (AD_{ad,t}, AD_{ad,t}'),
**characterized in that**
for localizing any, freely selectable BCS-transmitting mobile Agent-Device (AD_{fs}) of the BCS-transmitting mobile Agent-Devices (ADₜ, AD_{ad,t}) transmitting the broadcast-signals (BCS) being within the Radio-Communication-Network (RCNW) either directly receivable or indirectly receivable by the Anchor-Node-Devices (ACND₁,... ACNDₘ) respectively the receiving Anchor-Node-Device (ACNDᵣ)
**e**) each BCS-transmitting mobile Agent-Device (ADₜ, AD_{ad,t}) being within the Radio-Communication-Network (RCNW) in a direct sending/receiving distance to the freely selectable BCS-transmitting mobile Agent-Device (AD_{fs}) receives the broadcast-signals (BCS) transmitted from the freely selectable BCS-transmitting mobile Agent-Device (AD_{fs}) and thus becomes each a BCS-receiving mobile Agent-Device (ADᵣ) having in addition to a BCS-transmitting capability a BCS-receiving capability,
**f**) at least three of the BCS-receiving mobile Agent-Device (ADᵣ) - a first BCS-receiving mobile Agent-Device (ADᵣ₁), a second BCS-receiving mobile Agent-Device (ADᵣ₂) and a third BCS-receiving mobile Agent-Device (ADᵣ₃) - being each within the Radio-Communication-Network (RCNW) in a direct sending/-receiving distance to the freely selectable BCS-transmitting mobile Agent-Device (AD_{fs}) and receiving each the broadcast-signals (BCS) of the freely selectable BCS-transmitting mobile Agent-Device (AD_{fs}) process each based on at least one of relative position-based broadcast-signal-runtime-measurements and angle measurements between the freely selectable BCS-transmitting mobile Agent-Device (AD_{fs}) and each of the three BCS-receiving mobile Agent-Devices (ADᵣ₁, ADᵣ₂, ADᵣ₃) geometric reference values,
**g**) at least the three receiving mobile Agent-Devices (ADᵣ₁, ADᵣ₂, ADᵣ₃) and the freely selectable BCS-transmitting mobile Agent-Device (AD_{fs}) form a Sub-Radio-Communication-Network (SRCNW) being within the Radio-Communication-Network (RCNW) in a direct sending/receiving distance to at least two receiving Anchor-Node-Device (ACNDᵣ), from which at least one is arranged in each of the two one-dimensional line-arrangements (ODLA) and which process each due to the broadcast-signals (BCS) received each from an adjacent, BCS-transmitting mobile Agent-Device (AD_{ad,t}) of the Sub-Radio-Communication-Network (SRCNW) and based on at least one of relative position-based broadcast-signal-runtime-measurements and angle measurements between the adjacent, BCS-transmitting mobile Agent-Device (AD_{ad,t}) and the receiving Anchor-Node-Device (ACNDᵣ) geometric reference values,
**h**) the processed geometric reference values form further constraints, particularly including probabilistic information representing deviations of the measurements, of the optimization problem enabling extended localization such that by solving the optimization problem a further calculated solution provides a localized position of the freely selectable BCS-transmitting mobile Agent-Device (AD_{fs}).

7. Multi-Agent-Device-System (MADS) according to claim 6, **characterized in that**
the receiving Anchor-Node-Device (ACNDᵣ) is connected with a Central Computing Unit (CCU) and transfers the processed geometric reference values to the Central Computing Unit (CCU), so that the solving of the optimization problem with the constraints and the calculating of the solution enabling the localization are carried out centrally in the Central Computing Unit (CCU).

8. Multi-Agent-Device-System (MADS) according to claim 6 or 7, **characterized in that**
the receiving mobile Agent-Devices (ADᵣ, ADᵣ₁, ADᵣ₂, ADᵣ₃) are connected each with a Central Computing Unit (CCU) and transfer the processed geometric reference values to the Central Computing Unit (CCU), so that the solving of the optimization problem with the further constraints and the calculating of the solution enabling the extended localization are carried out centrally in the Central Computing unit (CCU).

9. Multi-Agent-Device-System (MADS) according to one of the claims 6 to 8, **characterized in that**
the mobile Agent-Device (AD₁,... ADₙ, ADₜ, AD_{ad,t}, AD_{fs}, ADᵣ, ADᵣ₁, ADᵣ₂, ADᵣ₃) is a Tag-Device mounted on a mobile "Automated Guided Vehicle <AGV>".

10. Multi-Agent-Device-System (MADS) according to one of the claims 6 to 9, **characterized in that**
the broadcast-signal (BCS) is a time signal.

11. Receiving mobile Agent-Device (ADᵣ) of at least three receiving mobile Agent-Device (ADᵣ₁, ADᵣ₂, ADᵣ₃) of a Multi-Agent-Device-System (MADS, MADS') for localizing mobile Agent-Devices, wherein the MAD-System (MADS, MADS') incorporates a number of Anchor-Node-Devices (ACND₁,... ACNDₘ, ACND₁',... ACNDₘ') having each a known system position and spanning in their system arrangement a two-dimensional arrangement structure (TDAS, TDAS') with two one-dimensional line-arrangements (ODLA, ODLA') intersecting in pairs and a further number of mobile Agent-Device (AD₁,... ADₙ, AD₁',... ADₙ') including the Mobile Agent-Device (ADᵣ) having each an unknown volatile system position, which form a Radio-Communication-Network (RCNW, RCNW') within the MAD-System (MADS, MADS') comprising a changing network topology, with
a transmitting component (TCP, TCP') transmitting as each Agent-Device of the further mobile Agent-Device (AD₁,... ADₙ, AD₁',... ADₙ') of the MAD-System (MADS, MADS') broadcast-signals (BCS, BCS') so that the receiving mobile Agent-Device (ADᵣ) is becoming a BCS-transmitting mobile Agent-Device (ADₜ, ADₜ'), wherein
the broadcast-signals (BCS, BCS') are used
- by a receiving Anchor-Node-Device (ACNDᵣ, ACNDᵣ') of the Anchor-Node-Devices (ACND₁,... ACNDₘ, ACND₁',... ACNDₘ'), being within the Radio-Communication-Network (RCNW, RCNW') in a direct sending/receiving distance to at least one adjacent, BCS-transmitting mobile Agent-Device (AD_{ad,t}, AD_{ad,t}') of the BCS-transmitting mobile Agent-Devices (ADₜ, ADₜ') and when the mobile Agent-Device (ADᵣ) is becoming the adjacent, BCS-transmitting mobile Agent-Device (AD_{ad,t}, AD_{ad,t}'), receiving the broadcast-signals (BCS, BCS') of the adjacent, BCS-transmitting mobile Agent-Device (AD_{ad,t}, AD_{ad,t}') to process based on at least one of based broadcast-signal-runtime-measurements and angle measurements between the adjacent, BCS-transmitting mobile Agent-Device (AD_{ad,t}, AD_{ad,t}') and the receiving Anchor-Node-Device (ACNDᵣ, ACNDᵣ') geometric reference values, in particular such as distances or angles, and
- to localize the mobile Agent-Device (ADᵣ) becoming the adjacent, BCS-transmitting mobile Agent-Device (AD_{ad,t}, AD_{ad,t}') when at least two further receiving Anchor-Node-Devices (AC-NDᵣ, ACNDᵣ'), from which at least one is arranged in each of the two one-dimensional line-arrangements (ODLA, ODLA'), are used to process each further geometric reference values, in the way that
- the processed geometric reference values form constraints, particularly including probabilistic information representing deviations of the measurements, of an optimization problem enabling localization such that by solving the optimization problem a calculated solution provides a localized position of the adjacent, BCS-transmitting mobile Agent-Device (AD_{ad,t}, AD_{ad,t}') respectively the mobile Agent-Device (ADᵣ), **characterized by**
a receiving component (RCP) and a processing component (PCP), wherein the processing component (PCP), being connected with the receiving component (RCP) and the transmitting component (TCP), forms with both components (RCP, TCP) a functional unit such that
for localizing any, freely selectable BCS-transmitting mobile Agent-Device (AD_{fs}) of the BCS-transmitting mobile Agent-Devices (ADₜ, AD_{ad,t}) transmitting the broadcast-signals (BCS) being within the Radio-Communication-Network (RCNW) either directly receivable or indirectly receivable by the Anchor-Node-Devices (ACND₁,... ACNDₘ) respectively the receiving Anchor-Node-Device (ACNDᵣ)
- the receiving component (RCP), when the mobile Agent-Device (ADᵣ) is within the Radio-Communication-Network (RCNW) in a direct sending/receiving distance to the freely selectable BCS-transmitting mobile Agent-Device (AD_{fs}), receives the broadcast-signals (BCS) transmitted from the freely selectable BCS-transmitting mobile Agent-Device (AD_{fs}),
- the processing component (PCP) processes as two other receiving mobile Agent-Devices of the at least three receiving mobile Agent-Device (ADᵣ₁, ADᵣ₂, ADᵣ₃), which as the receiving mobile Agent-Device (ADᵣ)
• receive each within the Radio-Communication-Network (RCNW) in a direct sending/receiving distance to the freely selectable BCS-transmitting mobile Agent-Device (AD_{fs}) the broadcast-signals (BCS) of the freely selectable BCS-transmitting mobile Agent-Device (AD_{fs}) and
• process each based on at least one of relative position-based broadcast-signal-runtime-measurements and angle measurements between the freely selectable BCS-transmitting mobile Agent-Device (AD_{fs}) and each of the two receiving mobile Agent-Devices geometric reference values,
based on at least one of relative position-based broadcast-signal-runtime-measurements and angle measurements between the freely selectable BCS-transmitting mobile Agent-Device (AD_{fs}) and the receiving mobile Agent-Devices (ADᵣ) geometric reference values, wherein
-- the mobile Agent-Device (ADᵣ) and the two other receiving mobile Agent-Devices of the at least three receiving mobile Agent-Device (ADᵣ₁, ADᵣ₂, ADᵣ₃) and the freely selectable BCS-transmitting mobile Agent-Device (AD_{fs}) form a Sub-Radio-Communication-Network (SRCNW) being within the Radio-Communication-Network (RCNW) in a direct sending/receiving distance to at least two receiving Anchor-Node-Device (AC-NDᵣ), from which at least one is arranged in each of the two one-dimensional line-arrangements (ODLA) and which process each due to the broadcast-signals (BCS) received each from an adjacent, BCS-transmitting mobile Agent-Device (AD_{ad,t}) of the Sub-Radio-Communication-Network (SRCNW) and based on at least one of relative position-based broadcast-signal-runtime-measurements and angle measurements between the adjacent, BCS-transmitting mobile Agent-Device (AD_{ad,t}) and the receiving Anchor-Node-Device (ACNDᵣ) geometric reference values, and
-- the processed geometric reference values, which form together with the processed geometric reference values of the two other receiving mobile Agent-Devices of the at least three receiving mobile Agent-Device (ADᵣ₁, ADᵣ₂, ADᵣ₃) further constraints, particularly including probabilistic information representing deviations of the measurements, of the optimization problem enabling extended localization such that by solving the optimization problem a further calculated solution provides a localized position of the freely selectable BCS-transmitting mobile Agent-Device (AD_{fs}).

12. Receiving mobile Agent-Device (ADᵣ) according to claim 11, **characterized in that**
the functional unit is designed such that the processing component (PCP) processing the geometric reference values transfers the geometric reference values via the transmitting component (TCP) to a Central Computing Unit (CCU) at which the optimization problem with the further constraints enabling the extended localization is solved centrally and the solution enabling the extended localization is calculated centrally.

13. Receiving mobile Agent-Device (ADᵣ) according to claim 11 or 12, **characterized by**
a Tag-Device mounted on a mobile "Automated Guided Vehicle <AGV>".

14. Receiving mobile Agent-Device (ADᵣ) according to one of the claims 11 to 13, **characterized in that** the broadcast-signal (BCS) is a time signal.

15. Receiving mobile Agent-Device (ADᵣ) of a Multi-Agent-Device-System (MADS) for localizing mobile Agent-Devices according to one the claims 6 to 10 for carrying out the method according to the claims 1 to 5.

16. Tag unit for localization issues, in particular used as mobile Agent-Device (AD) of a Multi-Agent-Device-System (MADS), with a transmitting component (TCP, TCP') **characterized by**
a receiving component (RCP) and a processing component (PCP), wherein the processing component (PCP), being connected with the receiving component (RCP) and the transmitting component (TCP), forms with both components (RCP, TCP) the unit for handling a localization issue.
